# EUROPEAN PATENT SPECIFICATION

(11) **EP 3 415 045 B1**
(45) Date of publication and mention of the grant of the patent: **26.07.2023**
(21) Application number: 17899225.1
(22) Date of filing: 19.12.2017
(51) Int. Cl.: A47J 27/00

(54) **SEPARABLE RICE COOKER**
TRENNBARER REISKOCHER
CUISEUR À RIZ SÉPARABLE

(30) Priority: 31.03.2017 CN 201720340884 U
(43) Date of publication of application: 19.12.2018
(73) Proprietor: Foshan Shunde Midea Electrical Heating Appliances Manufacturing Co., Limited, Foshan, Guangdong 528311 (CN)
(72) Inventor: ZHU, Linbo, Foshan Guangdong 528311 (CN); ZHU, Chuanbin, Foshan Guangdong 528311 (CN); CHEN, Xianhuai, Foshan Guangdong 528311 (CN); YUAN, Wei, Foshan Guangdong 528311 (CN); LUO, Zhixiao, Foshan Guangdong 528311 (CN); FU, Zhengting, Foshan Guangdong 528311 (CN); WU, Yuquan, Foshan Guangdong 528311 (CN); CHEN, Wei, Foshan Guangdong 528311 (CN)
(74) Representative: Dunlop, Hugh Christopher
(86) International application number: PCT/CN2017/117262
(87) International publication number: WO 2018/176930

(56) References cited:
- WO-A1-2017/036145
- CN-A- 107 440 480
- CN-Y- 2 730 260
- JP-A- H09 289 946
- JP-A- H09 289 946
- JP-A- 2000 041 838
- JP-A- 2003 061 817

## Description

### FIELD

The present disclosure relates to a technical field of household appliances, and specifically to a split electric rice cooker.

### BACKGROUND

For a split electric rice cooker in the related art, a distance between a heating element and an inner pot must be kept relatively small so that the inner pot can be well heated by a sensing element. In addition, a plastic piece (a cooker body) is disposed between the inner pot and a base (including the heating element) so that the inner pot and the base are spaced apart, and a distance between the inner pot and the plastic piece should be kept relatively large so that the plastic piece doesn't deform due to the influence of the heat of the inner pot. For this reason, the inner pot is generally arranged relatively far away from the heating element, that is, the inner pot is raised to avoid the above situation. However, this approach not only enlarges a volume of the electric rice cooker, increases the cost, but also leads to a poor heating effect. JP 2003/061817 A describes a rice cooker featuring a detachable shoulder cover to aid cleaning of the appliance. This document discloses a work coil clamped between a protection frame and a coil die, and an inner pot that sits flush with the protection frame. JP H09 289946 A also describes a cooker.

### SUMMARY

The present disclosure seeks to solve one of the technical problems existing in the related art to at least some extent.

Thus, an objective of the present disclosure is to propose a split electric rice cooker having better safety performance.

The invention is set out in the claims.

With the split electric rice cooker according to embodiments of the present disclosure, not only a volume of the cooker is reduced, the cost is saved, but also the heating efficiency is higher and the safety performance is better.

### BRIEF DESCRIPTION OF THE DRAWINGS

Fig. 1 is a schematic view of a split electric rice cooker according to embodiments of the present disclosure.
Fig. 2 is a partially enlarged view illustrating an area A in Fig. 1.

### Reference numerals:

split electric rice cooker 1000, base 100,
cooker 200, base plate 210, base-plate through hole 214, cooker body 220, inner-pot heat insulation piece 230, bottom-wall protrusion 234.

### DETAILED DESCRIPTION

The embodiments of the present disclosure are described in detail below, and examples of the embodiments are shown in the accompanying drawings, in which the same or similar reference numerals denote the same or similar elements or elements having the same or similar functions throughout. The embodiments described herein with reference to drawings are explanatory, illustrative, and used to generally understand the present disclosure, and cannot be construed to limit the present disclosure.

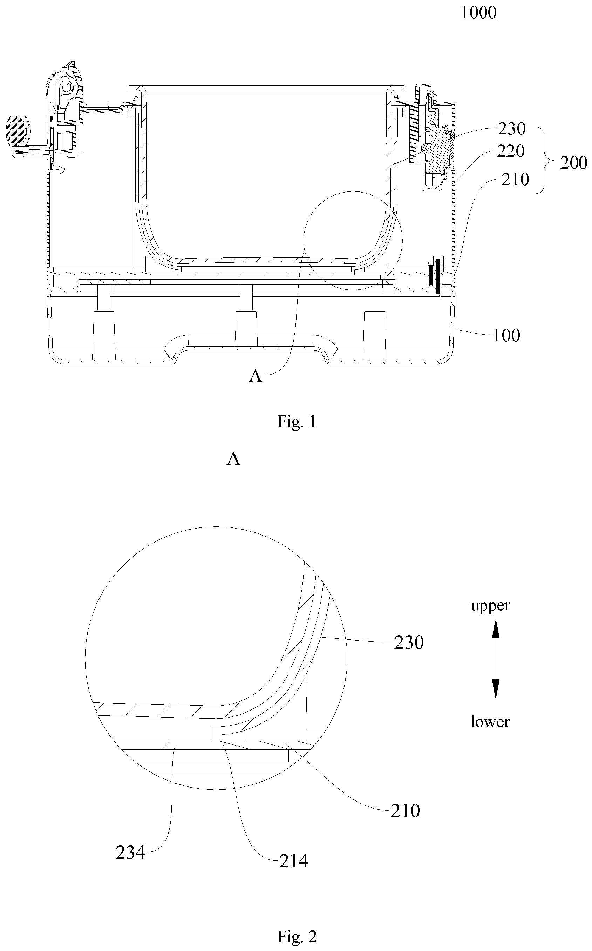

A split electric rice cooker 1000 according to embodiments of the present disclosure will be described in detail with reference to Fig. 1 to Fig. 2.

The split electric rice cooker 1000 according to embodiments of the present disclosure includes: a base 100; and a cooker 200 suitable to rest on the base 100 and separable with respect to the base 100. The base 100 is a base for heating i.e. for heating an inner pot in the cooker 200.

The cooker 200 is provided with the inner pot therein and has a cooker bottom wall. The cooker bottom wall is located below the inner pot and is constructed as a single-layer wall structure.

In the split electric rice cooker according to embodiments of the present disclosure, with the bottom wall of the cooker 200 being constructed as the single-layer wall structure to reduce a distance between the inner pot and the plastic piece, not only a volume of the cooker 200 is reduced, the cost is saved, but also the heating efficiency is higher and the safety performance is better.

As illustrated in Fig. 1, the split electric rice cooker 1000 according to embodiments of the present disclosure includes the cooker 200. The cooker 200 includes a base plate 210, a cooker body 220 and an inner-pot heat insulation piece 230. As illustrated in Fig. 2, the base plate 210 is provided with a base-plate through hole 214, the cooker body 220 is fixed to the base plate 210. The inner-pot heat insulation piece 230 is provided in the cooker body 220 and includes a circumferential wall surrounding the inner pot and the bottom wall located below the inner pot. A bottom-wall protrusion 234 protruding downwards is formed in the bottom wall of the inner-pot heat insulation piece 230, the bottom-wall protrusion 234 is fitted in the base-plate through hole 214, so that the bottom-wall protrusion 234 constitutes the single-layer wall structure.

In the split electric rice cooker 1000 according to embodiments of the present disclosure, by providing the inner-pot heat insulation piece 230 with the bottom-wall protrusion 234 and providing the base plate 210 with the base-plate through hole 214 for the bottom-wall protrusion 234 to extend into, a distance between a heating element and the inner pot is reduced and the heat transfer efficiency is increased, and moreover, the inner-pot heat insulation piece 230 is prevented from interfering with the base plate 210 by arranging the bottom-wall through hole, a volume of the cooker 200 is reduced and the cost is saved. Meanwhile, the bottom-wall protrusion 234 is increased in distance from the inner pot, so that an amount of heat radiated from the inner pot to the bottom-wall protrusion 234 is greatly reduced, such that the bottom-wall protrusion 234 is not easy to age or catch fire and has longer service life, thus improving the safety performance of the use of the electric rice cooker.

It should be noted that the base 100 is provided with the heating element for heating an inner container of the cooker 200. The heating element includes, but is not limited to, an electromagnetic heating element. The base 100 is provided with a plug for adapting to an external power supply. The heating element can be powered after the plug is plugged in, and hence the heating element is enabled to emit heat to transfer heat to the inner container of the cooker 200.

As illustrated in Fig. 2, a lower surface of the bottom-wall protrusion 234 is flush with a lower surface of the base plate 210. Thus, the cooker 200 has a flush bottom and exhibits a more artistic appearance.

In order to improve the seal property of the cooker 200, an inner diameter of the base-plate through hole 214 can be equal to an outer diameter of the bottom-wall protrusion 234.

In some embodiments of the present disclosure, an inner diameter of the base-plate through hole 214 is not smaller than an outer diameter of an outer bottom surface of the inner pot.

As illustrated in Fig. 1, the inner pot and the base-plate through hole 214 are arranged coaxially. Thus, the heat transfer from the heating element to the inner pot is more even.

As a preferable embodiment, the base-plate through hole 214 can be circular. Certainly, the present disclosure is not limited to this, the base-plate through hole 214 can also be a square hole, an elliptical hole or the like.

The inner-pot heat insulation piece 230 is a plastic piece. Thus, a weight of the cooker 200 can be further reduced.

In some embodiments of the present disclosure, the circumferential wall of the inner-pot heat insulation piece 230 is spaced apart from the inner pot. Thus, the heat insulation effect is better, the aging of the inner-pot heat insulation piece 230 caused by being used for too long is avoided, and the service life of the inner-pot heat insulation piece 230 is prolonged.

In some embodiments of the present disclosure, an upper circumferential edge of the inner-pot heat insulation piece 230 extends upwards up to an upper flange of the inner pot. In this way, the inner-pot heat insulation piece 230 also insulates heat of the flange of the inner pot, and the cooker 200 is protected more comprehensively.

As illustrated in Fig. 2, the inner-pot heat insulation piece 230 has a thickness of 1.5-2.8mm. Certainly, the single-layer wall structure of the bottom wall of the cooker 200 is not limited to the specific embodiment illustrated in Fig. 1. In some other embodiments, the cooker includes: the base plate 210, the cooker body 220 and the inner-pot heat insulation piece 230. The base plate 210 is provided with a base-plate protrusion protruding upwards, the cooker body 220 is fixed to the base plate 210, and the inner-pot heat insulation piece 230 is provided in the cooker body 220. The inner-pot heat insulation piece 230 includes the circumferential wall surrounding the inner pot and the bottom wall located below the inner pot. A bottom-wall through hole is formed in the bottom wall of the inner-pot heat insulation piece, the base-plate protrusion is fitted in the bottom-wall through hole, so that the base-plate protrusion constitutes the single-layer wall structure.

In this way, the distance between the inner pot and the plastic piece can also be reduced, hence the volume of the cooker 200 is reduced, the cost is saved, and the heating efficiency is higher and the safety performance is better.

In the specification, it is to be understood that terms such as "central," "longitudinal," "lateral," "length," "width," "thickness," "upper," "lower," "front," "rear," "left," "right," "vertical," "horizontal," "top," "bottom," "inner," "outer," "clockwise," "counterclockwise" "axially," "radially," and "circumferentially" should be construed to refer to the orientation as then described or as shown in the drawings under discussion. These relative terms are for convenience of description and do not require that the present disclosure be constructed or operated in a particular orientation, thus cannot be construed to limit the present disclosure.

In addition, terms such as "first" and "second" are used herein for purposes of description and are not intended to indicate or imply relative importance or significance or to imply the number of indicated technical features. Thus, the feature defined with "first" and "second" may comprise one or more of this feature. In the description of the present disclosure, "a plurality of" means two or more than two, unless specified otherwise.

In the present disclosure, unless specified or limited otherwise, the terms "mounted," "connected," "coupled," "fixed" and the like are used broadly, and may be, for example, fixed connections, detachable connections, or integral connections; may also be mechanical or electrical connections; may also be direct connections or indirect connections via intervening structures; may also be inner communications of two elements, which can be understood by those skilled in the art according to specific situations.

In the present disclosure, unless specified or limited otherwise, a structure in which a first feature is "on" or "below" a second feature may include an embodiment in which the first feature is in direct contact with the second feature, and may also include an embodiment in which the first feature and the second feature are not in direct contact with each other, but are contacted via an additional feature formed therebetween. Furthermore, a first feature "on," "above," or "on top of" a second feature may include an embodiment in which the first feature is right or obliquely "on," "above," or "on top of" the second feature, or just means that the first feature is at a height higher than that of the second feature; while a first feature "below," "under," or "on bottom of" a second feature may include an embodiment in which the first feature is right or obliquely "below," "under," or "on bottom of" the second feature, or just means that the first feature is at a height lower than that of the second feature.

Reference throughout this specification to "an embodiment," "some embodiments," "an example," "a specific example," or "some examples," means that a particular feature, structure, material, or characteristic described in connection with the embodiment or example is included in at least one embodiment or example of the present disclosure.

Although embodiments have been shown and described, it would be appreciated that the above embodiments are explanatory cannot be construed to limit the present disclosure, and changes, alternatives, and modifications can be made in the embodiments by those skilled in the art in the scope of the present disclosure as defined by the claims.

## Claims

1. A split electric rice cooker (1000), comprising:
a base (100);
a cooker (200) suitable to rest on the base and separable with respect to the base, the cooker being provided with an inner pot therein and having a cooker bottom wall, the cooker bottom wall being located below the inner pot, and the cooker bottom wall being constructed as a single-layer wall structure;
a base plate (210) provided with a base-plate through hole (214);
a cooker body fixed to the base plate (220);
an inner-pot heat insulation piece (230) provided in the cooker body, the inner-pot heat insulation piece comprising a circumferential wall surrounding the inner pot and the cooker bottom wall located below the inner pot, a bottom-wall protrusion (234) protruding downwards and being formed in the inner-pot heat insulation piece located below the inner pot, the bottom-wall protrusion being fitted in the base-plate through hole, so that the bottom-wall protrusion constitutes part of the single-layer wall structure, wherein the bottom-wall protrusion (234) provides an increased distance between the inner-pot heat insulating piece located below the inner pot and the inner pot, wherein;
a lower surface of the bottom-wall protrusion is flush with a lower surface of the base plate.

2. The split electric rice cooker according to claim 1, wherein an inner diameter of the base-plate through hole is not smaller than an outer diameter of an outer bottom surface of the inner pot.

3. The split electric rice cooker according to any one of claims 1 to 2, wherein the inner pot and the base-plate through hole are arranged coaxially.

4. The split electric rice cooker according to any one of claims 1 to 3, wherein the inner-pot heat insulation piece is a plastic piece.

5. The split electric rice cooker according to any one of claims 1 to 4, wherein the circumferential wall of the inner-pot heat insulation piece is spaced apart from the inner pot.

6. The split electric rice cooker according to any one of claims 1 to 5, wherein an upper circumferential edge of the inner-pot heat insulation piece extends upwards up to an upper flange of the inner pot.

7. The split electric rice cooker according to any one of claims 1 to 6, wherein a thickness of the inner-pot heat insulation piece is 1.5-2.8mm.

## Patentansprüche

1. Geteilter elektrischer Reiskocher (1000), der Folgendes beinhaltet:
ein Unterteil (100);
einen Kocher (200), der zum Ruhen auf dem Unterteil geeignet ist und in Bezug auf das Unterteil trennbar ist, wobei der Kocher mit einem Innentopf in ihm versehen ist und eine Kocherbodenwand hat, wobei sich die Kocherbodenwand unter dem Innentopf befindet und die Kocherbodenwand als einschichtige Wandstruktur aufgebaut ist;
Unterteilplatte (210), die mit einer durchgehenden Unterteilplattenöffnung (214) versehen ist;
einen Kocherkörper, der an der Unterteilplatte (220) befestigt ist;
ein Innentopf-Wärmedämmstück (230), das in dem Kocherkörper bereitgestellt ist, wobei das Innentopf-Wärmedämmstück eine Umfangswand aufweist, die den Innentopf und die unter dem Innentopf befindliche Kocherbodenwand umgibt, wobei ein Bodenwandvorsprung (234) nach unten vorsteht und im unter dem Innentopf befindlichen Innentopf-Wärmedämmstück gebildet ist, wobei der Bodenwandvorsprung in die durchgehende Unterteilplattenöffnung eingepasst ist, so dass der Bodenwandvorsprung Teil der einschichtigen Wandstruktur bildet, wobei der Bodenwandvorsprung (234) für einen größeren Abstand zwischen dem unter dem Innentopf befindlichen Innentopf-Wärmedämmstück und dem Innentopf sorgt, wobei:
eine Unterseite des Bodenwandvorsprungs mit einer Unterseite der Unterteilplatte bündig ist.

2. Geteilter elektrischer Reiskocher nach Anspruch 1, wobei ein Innendurchmesser der durchgehenden Unterteilplattenöffnung nicht kleiner als ein Außendurchmesser einer Bodenaußenseite des Innentopfs ist.

3. Geteilter elektrischer Reiskocher nach einem der Ansprüche 1 bis 2, wobei der Innentopf und die durchgehende Unterteilplattenöffnung koaxial angeordnet sind.

4. Geteilter elektrischer Reiskocher nach einem der Ansprüche 1 bis 3, wobei das Innentopf-Wärmedämmstück ein Plastikstück ist.

5. Geteilter elektrischer Reiskocher nach einem der Ansprüche 1 bis 4, wobei die Umfangswand des Innentopf-Wärmedämmstücks vom Innentopf beabstandet ist.

6. Geteilter elektrischer Reiskocher nach einem der Ansprüche 1 bis 5, wobei ein oberer Umfangsrand des Innentopf-Wärmedämmstücks sich nach oben zu einem oberen Flansch des Innentopfs erstreckt.

7. Geteilter elektrischer Reiskocher nach einem der Ansprüche 1 bis 6, wobei eine Dicke des Innentopf-Wärmedämmstücks 1,5 bis 2,8 mm ist.

## Revendications

1. Cuiseur à riz électrique du type divisé (1000), comportant :
une base (100) ;
un cuiseur (200) en mesure de reposer sur la base et pouvant être séparé de la base, le cuiseur étant doté d'un pot intérieur dans celui-ci et ayant une paroi de fond de cuiseur, la paroi de fond de cuiseur se trouvant sous le pot intérieur, et la paroi de fond de cuiseur étant construite sous la forme d'une structure de paroi à une seule couche ;
une plaque de base (210) dotée d'un trou traversant de plaque de base (214) ;
un corps de cuiseur fixé sur la plaque de base (220) ;
une pièce d'isolation thermique de pot intérieur (230) mise en oeuvre dans le corps de cuiseur, la pièce d'isolation thermique de pot intérieur comportant une paroi circonférentielle qui entoure le pot intérieur et la paroi de fond de cuiseur se trouvant sous le pot intérieur, une partie saillante de paroi de fond (234) qui fait saillie vers le bas et qui est formée dans la pièce d'isolation thermique de pot intérieur se trouvant sous le pot intérieur, la partie saillante de paroi de fond étant adaptée dans le trou traversant de plaque de base, de telle sorte que la partie saillante de paroi de fond fait partie de la structure de paroi à une seule couche, dans lequel la partie saillante de paroi de fond (234) fournit une distance allant en augmentant entre la pièce d'isolation thermique de pot intérieur se trouvant sous le pot intérieur et le pot intérieur, dans lequel ;
une surface inférieure de la partie saillante de paroi de fond est de niveau par rapport à une surface inférieure de la plaque de base.

2. Cuiseur à riz électrique du type divisé selon la revendication 1, dans lequel un diamètre intérieur du trou traversant de plaque de base n'est pas inférieur à un diamètre extérieur d'une surface de fond extérieure du pot intérieur.

3. Cuiseur à riz électrique du type divisé selon l'une quelconque des revendications 1 à 2, dans lequel le pot intérieur et le trou traversant de plaque de base sont agencés de manière coaxiale.

4. Cuiseur à riz électrique du type divisé selon l'une quelconque des revendications 1 à 3, dans lequel la pièce d'isolation thermique de pot intérieur est une pièce en plastique.

5. Cuiseur à riz électrique du type divisé selon l'une quelconque des revendications 1 à 4, dans lequel la paroi circonférentielle de la pièce d'isolation thermique de pot intérieur est espacée par rapport au pot intérieur.

6. Cuiseur à riz électrique du type divisé selon l'une quelconque des revendications 1 à 5, dans lequel un bord circonférentiel supérieur de la pièce d'isolation thermique de pot intérieur s'étend vers le haut jusqu'à une bride supérieure du pot intérieur.

7. Cuiseur à riz électrique du type divisé selon l'une quelconque des revendications 1 à 6, dans lequel une épaisseur de la pièce d'isolation thermique de pot intérieur mesure 1,5-2,8 mm.
